(19) Europäisches Patentamt
European Patent Office
Office européen des brevets

(11) EP 0 778 476 A2

(12) EUROPEAN PATENT APPLICATION

(43) Date of publication:
11.06.1997 Bulletin 1997/24

(51) Int. Cl.[6]: G02B 1/11

(21) Application number: 96119707.6

(22) Date of filing: 09.12.1996

(84) Designated Contracting States:
DE FR GB

(30) Priority: 07.12.1995 JP 318825/95
22.02.1996 JP 34661/96

(71) Applicant: FUJI PHOTO FILM CO., LTD.
Kanagawa (JP)

(72) Inventors:
- Nakamura, Kazuhiro
Minami-Ashigara-shi, Kanagawa (JP)
- Yasuda, Tomokazu
Minami-Ashigara-shi, Kanagawa (JP)

(74) Representative: Hansen, Bernd, Dr. Dipl.-Chem. et al
Hoffmann, Eitle & Partner,
Patentanwälte,
Arabellastrasse 4
81925 München (DE)

# (54) Anti-reflection film and display device having the same

(57) An anti-reflection film contains a low refractive index layer which comprises micro particles of a fluorine-containing polymer which are so deposited to superpose at least one micro particles on another, to form micro voids surrounded by the micro particles, the micro particles having a mean particle size of 5 to 200 nm and micro voids formed by superposing at least two particles upon each other A display device provided with the anti-reflection film is also disclosed.

EP 0 778 476 A2

## Description

### BACKGROUND OF THE INVENTION

### Field of the Invention

The present invention relates to an anti-reflection film suitable for lowering reflection of light on a displaying surface of a display device, and relates to a display device provided with the anti-reflection film.

### Description of Prior Art

As anti-reflection films for visible light, multilayer films wherein plural transparent layers made of metal compounds (e.g., metal oxides) are superposed one on another have been employed. In the case that a monolayer film is employed instead of the multilayer film, the monolayer film cannot effectively lower reflection of light having wide wavelength region (e.g., visible light), though the monolayer film can lower reflection of monochromatic light.

In the multilayer film, increase of the number of the layers can enlarge a wavelength region of light to which the multilayer film can apply. Therefore, the known anti-reflection film is the multilayer film composed of two or more metal oxide layers which are deposited by means of deposition. However, formation of the multilayer film requires a complicated process comprising a number of physical or chemical deposition procedures which correspond to the number of the metal compound layers having predetermined refractive index and thickness, under highly precise control of the thickness for each layer. Further, on the multilayer film, a fluororesin layer is needed to be formed to improve stain resistance (e.g., resistance to formation of fingerprint onto the surface of the film).

Alternatively to the multilayer film, it is known to use, as the anti-reflection film, a film in which refractive indices to air gradually vary in the thickness direction. Japanese Patent Provisional Publication No. 2(1990)-245702 describes an anti-reflection film comprising $MgF_2$ micro particles and $SiO_2$ micro particles having refractive index between those of glass and $MgF_2$, in which blending ratio of the $MgF_2$ micro particles and $SiO_2$ micro particles varies in the thickness direction. In more detail, the anti-reflection film is prepared by coating a livid containing a mixture of the $MgF_2$ micro particles and $SiO_2$ micro particles on a glass plate so as to reduce a ratio of the $SiO_2$ micro particles to $MgF_2$ micro particles. Thus formed anti-reflection film shows a little variation of refractive indices between its bottom and the upper surface of the glass plate. Therefore, the anti-reflection film shows a high anti-reflection effect.

Japanese Patent Provisional Publication No. 5(1993)-13021 also describes an anti-reflection film comprising two layers of $MgF_2$ micro particles and $SiO_2$ micro particles dispersed in ethyl silicate, a first layer containing $MgF_2$ micro particles and $SiO_2$ micro particles at ratio of 7/3 and a second layer containing $MgF_2$ micro particles and $SiO_2$ micro particles at ratio of 1/1. The first layer has a refractive index of 1.42 and the second layer has a refractive index of 1.44. Thus, the anti-reflection film does not show a satisfactory anti-reflection effect.

Japanese Patent Provisional Publication No. 7(1995)-92305 describes an anti-reflection film which comprises polymer particles (e.g., refractive index: 1.428) composed of a core and shell therearound and which has a structure composed of an uneven surface portion of a low refractive index comprising air and the polymer particles and a portion comprising only the polymer particles. The core is composed of copolymer of methyl methacrylate, methacrylic acid, trifluoroethyl acrylate and N-isobutoxymethyl acrylate, and the shell is composed of copolymer of styrene, acrylic acid and butyl acrylate.

Japanese Patent Provisional Publication No. 7(1995)-168006 describes an anti-reflection film which has a structure composed of an uneven surface portion of a low refractive index comprising air and particles (e.g., $MgF_2$), a portion (intermediate refractive index) comprising only the particles thereunder, and a portion comprising the particles and binder.

Japanese Patent Provisional Publications No. 2(1990)-245702, No. 5(1993)-13021, No. 7(1995)-92305 and No. 7(1995)-168006 mentioned above, all describe a film in which the refractive indices gradually vary in the thickness direction. However, the preparation of these films require complicated procedures and skilled art, and further the films do not show a satisfactory anti-reflection effect.

### SUMMERY OF THE INVENTION

It is a object of the invention to provide an anti-reflection film showing a high anti-reflection effect which can be prepared by a simple process.

It is another object of the invention to provide an image display device provided with an anti-reflection film showing high anti-reflection effect which can be prepared by a simple process.

There is provided by the invention an anti-reflection film comprising a low refractive index layer which comprises particles of a fluorine-containing polymer (i.e., fluororesin) which are so deposited to superpose at least one micro particles on another, to form micro voids surrounded by the micro particles, said micro particles having a mean particle size

of 5 to 200 nm and micro voids formed by superposing at least two said particles upon each other.

Preferred embodiments of anti-reflection film according to the invention are as follows:

1) The anti-reflection film wherein the fluorine-containing polymer is a crystalline polymer.
2) The anti-reflection film wherein the fluorine-containing polymer contains a fluorine atom in an amount of not less than 0.30 weight fraction (preferably not less than 0.30 to 0.75 weight fraction, especially 0.35 to 0.75 weight fraction).
3) The anti-reflection film wherein the micro voids are contained in the range of 0.05 to 0.50 volume fraction (preferably 0.10 to 0.50 volume fraction) in the low refractive index layer.
4) The anti-reflection film wherein the low refractive index layer further contains a binder.
5) The anti-reflection film wherein the particles of fluorine-containing polymer have a core-shell structure.
6) The anti-reflection film wherein the particles of fluorine-containing polymer are treated with a silane-coupling agent.
7) The anti-reflection film wherein the fluorine-containing polymer is a homopolymer of perfluoro-2,2-dimethyl-1-dioxol or tetrafluoroethylene or a copolymer of these monomers.
8) The anti-reflection film which has a haze of 3 to 30%.
9) The anti-reflection film wherein the low refractive index layer is overlaid on a transparent film.
10) The anti-reflection film wherein the low refractive index layer has a thickness of 50 to 200 nm.

Further, there is provided by the invention an antireflection film comprising the low refractive index layer provided on a high refractive index layer having a refractive index higher than that of the low refractive index layer.

Furthermore, there is provided by the invention an anti-reflection film comprising the low refractive index layer provided on a high refractive index layer having a refractive index higher than that of the low refractive index layer, which is then provided on an intermediate refractive index layer having a refractive index between that of the low refractive index layer and that of the high refractive index layer.

The high refractive index layer provided with the low refractive index layer is preferably provided on a transparent film. The intermediate refractive index layer equipped with the low refractive index layer and the high refractive index layer is preferably provided on a transparent film.

Moreover, the invention provides an anti-reflection film comprising a low refractive index layer which has a refractive index of 1.20 to 1.40 and a thickness of 50 to 200 nm and is provided with micro voids of 0.02 to 0.28 volume fraction.

Furthermore, there is provided by the invention a display device provided with at least one anti-reflection film. The anti-reflection film is selected from the films described above.

The low refractive index layer of the anti-reflection film according to the invention is formed of the fluororesin particles and voids formed by the surrounding particles. The low refractive index layer is a layer having refractive index lower than that of its material, and has an extremely low refractive index. Particularly, the antireflection film using the low refractive index layer together with at least one layers having high refractive index shows a high anti-reflection effect.

## BRIEF DESCRIPTION OF THE DRAWINGS

Fig. 1 is a cross-sectional view schematically showing a representative example of the anti-reflection film of the invention.

Fig. 2 is a cross-sectional view schematically showing another representative example of the anti-reflection film of the invention.

Fig. 3 is a cross-sectional view schematically showing other representative example of the anti-reflection film of the invention.

## DETAILED DESCRIPTION OF THE INVENTION

The anti-reflection film of the invention basically comprises a low refractive index layer formed of the fine fluororesin particles. The low refractive index layer has micro voids formed by superposing at least two particle layers one on another.

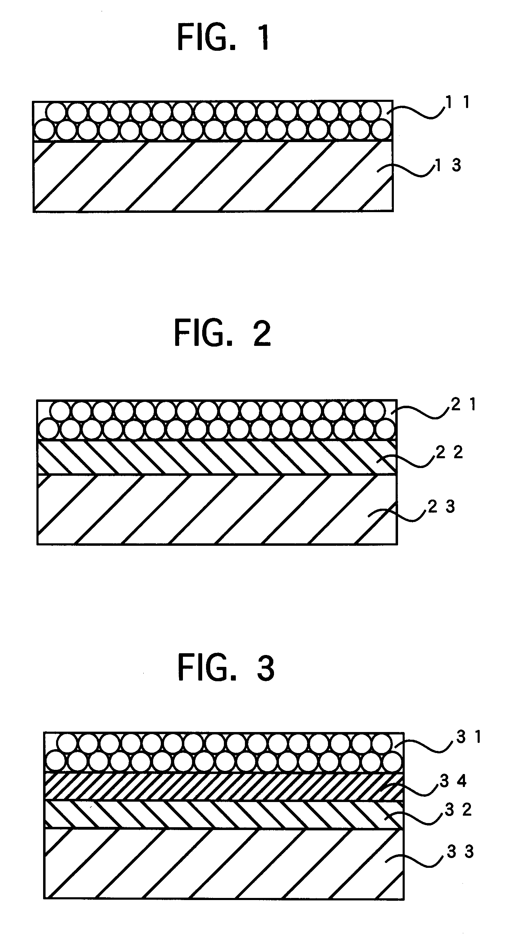

The representative example of the anti-reflection film of the invention is shown in Fig. 1. A low-refractive index layer 11 is formed on a transparent film (support) 13. The low refractive index layer 11 comprises fluororesin particles and micro voids formed between the particles. In the low refractive index layer 11, at least two fluororesin particles are superposed in the thickness direction, whereby the micro voids can be formed between the particles. Thus, the micro voids are generally arranged uniformly in the low refractive index layer 11.

The fluororesin particles are generally bonded to each other through fusion or softening by heating or removal of solvent. Otherwise, when the fluororesin particles have functional groups (reactive groups), the fluororesin particles can be bonded by reacting between the functional groups; or the fluororesin particles can be bonded using an extremely

small amount of binder or a silane coupling agent. The low refractive index layer is generally formed on the surface of the transparent film or the surface of the top layer formed on the transparent film

The particles are generally arranged in plane direction in the thickness of one particle to form one particle layer, and several particle layers are superposed to form the low-refractive layer of the invention. Therefore, the micro voids formed by the surrounding particles are generally formed uniformly in void size and in interval, because the sizes of the particles are almost the same one another.

Air on the low-refractive layer 11 has a refractive index of 1.00, while the fluororesin particle generally has a refractive index of 1.25 to 1.45. The low-refractive layer 11 generally shows an intermediate value between a refractive index of air and that of the fluororesin particle. Thus, the refractive index of the low refractive index layer 11 can be lowered by increasing the volume fraction of the micro voids through using fluororesin fine particles and forming micro voids between the fine particles. The mean particle size of the fluororesin particles generally is in the range of 5 to 200 m, preferably 5 to 50 nm, and a thickness of the low-refractive layer generally is in the range of 50 to 400 nm, preferably 50 to 200 nm.

Another representative example of the anti-reflection film of the invention is shown in Fig. 2. A high refractive index layer 22 is formed on a transparent film 23, and a low refractive index layer 21 is formed on the high-refractive index layer 22. Increase of the number of layers constituting the anti-reflection film generally enlarges the wavelength region to which the anti-reflection film can apply. This is based on the principle of the multilayer anti-reflection film using metal compounds.

In the anti-reflection film having the two layers, the high refractive index layer and the low refractive index layer generally satisfy the following conditions:

$$m\lambda/4 \times 0.7 < n_1 d_1 < m\lambda/4 \times 1.3 \qquad (1)$$

$$n\lambda/4 \times 0.7 < n_2 d_2 < n\lambda/4 \times 1.3 \qquad (2)$$

in which m represents a positive integer (generally 1, 2 or 3), $n_1$ represents a refractive index of the high refractive index layer, $d_1$ represents a thickness (nm) of the high refractive index layer, n represents a positive odd number (generally 1), $n_2$ represents a refractive index of the low refractive index layer, and $d_2$ represents a thickness (nm) of the low refractive index layer. The refractive index ($n_1$) of the high refractive index layer is higher by at least 0.05 than that of the transparent film, and the refractive index ($n_2$) of the low refractive index layer is lower by at least 0.1 than that of the high refractive index layer and lower by at least 0.05 than that of the transparent film. Further, $n_1$ generally is in the range of 1.5 to 1.7.

The above conditions (1) and (2) are well known formerly, and, for example, described in Japanese Patent Provisional Publication No. 59(1984)-50401.

A further representative example of the anti-reflection film of the invention is shown in Fig. 3. An intermediate refractive index layer 32 is formed on a transparent film 33, a high refractive index layer 34 is formed on the intermediate-refractive index layer 32, and the low refractive index layer 31 is formed on the high-refractive index layer 34. The intermediate refractive index layer 32 has a refractive index between that of the high refractive index layer 34 and that of the low refractive index layer 31. The provision of anti-reflection film preferably shown in Fig. 3 further enlarges the wavelength region of light to which the anti-reflection film can apply, compared with the anti-reflection film shown in Fig. 2.

In the anti-reflection film having the three layers, the intermediate-, high- and low refractive index layers satisfy the following conditions:

$$h\lambda/4 \times 0.7 < n_3 d_3 < h\lambda/4 \times 1.3 \qquad (3)$$

$$k\lambda/4 \times 0.7 < n_4 d_4 < k\lambda/4 \times 1.3 \qquad (4)$$

$$j\lambda/4 \times 0.7 < n_5 d_5 < j\lambda/4 \times 1.3 \qquad (5)$$

in which h represents a positive integer (generally 1, 2 or 3), $n_3$ represents a refractive index of the intermediate refractive index layer, $d_3$ represents a thickness (nm) of the intermediate refractive index layer; k represents a positive integer (generally 1, 2 or 3), $n_4$ represents a refractive index of the high refractive index layer, $d_4$ represents a thickness (nm) of the high refractive index layer; j represents a positive odd number (generally 1), $n_5$ represents a refractive index of the low refractive index layer, and $d_5$ represents a thickness (nm) of the low refractive index layer. The refractive index of intermediate refractive index layer 32 generally is in the range of 1.5 to 1.7, and the refractive index of high refractive index layer 34 generally is in the range of 1.7 to 2.2.

The fluororesin particles used in the invention have a mean particle size of 5 to 200 nm, preferably 5 to 50 nm, mentioned previously. The fluororesin particles are, for example, obtained from polymer latex of fluororesin. Increase of the

particle size brings about increase of scattering of light on the surface of the film. For example, when the particles of more than 200 nm is employed, scattered light is colored. The fluororesin particles generally have glass transition temperature (Tg) of not lower than room temperature, preferably not lower than 100°C (and generally is not higher than 200°C). In the case that Tg of the fluororesin particles is lower than room temperature, the particles are deformed by excessive softening whereby micro voids disappear to increase the refractive index.

As the fluororesin particles, two or more kinds of fluororesin particles having Tg deferent from each other can be employed. The difference of Tg's of the fluororesin particles is generally not less than 5°C, preferably not less than 20°C.

The fluororesin particles of polymer latex, for example, have a structure comprising an inside portion (core) containing a large amount of the fluorine atom which is capable of lowering the refractive index, and an outside portion (shell) containing a relatively small amount of fluorine atoms which promotes adhesion between the particles or between the particles and the under layer (e.g., high refractive index layer, transparent film). The surface of the shell may have an acryoloyl group or epoxy group thereon.

As the fluororesin of the particles, both crystalline fluororesin and amorphous fluororesin can be employed. Although a crystalline fluororesin generally lowers light transmittance, the crystalline fluororesin of the invention is employed in the form of extremely fine particle which is far small size compared with wavelength of light and therefore scarcely lowers the light transmittance. Thus, in the invention, the crystalline fluororesin can be employed for preparing the anti-reflection film.

Examples of the fluororesin include a homopolymer and copolymer formed from the following monomer:

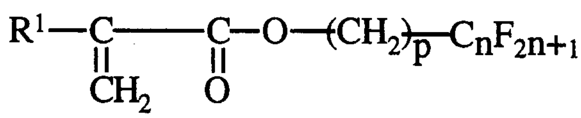

in which $R^1$ represents a hydrogen atom, a methyl group or a fluorine atom, and p and n independently represent an integer;

$CH_2=CHF$, $CH_2=CF_2$, $CF_2=CHF$,

$CH_2=CH-C_nF_{2n+1}$ (n: an integer), $CF_2=CF-CF_3$

$CF_2=CF-O-C_nF_{2n+1}$ (n: an integer),

$CF_2=CF-O-CF_2CF(CF_3)-O-CF_2CF_2COOCH_3$ ,

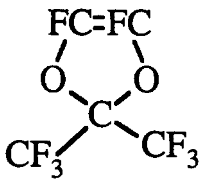

,

$CF_2=CFOCF_2CF=CF_2$ , $CF_2=CFOCF_2CF_2CF=CF_2$ ,

$CF_2=CFOCF_2CF=CH_2$ ,

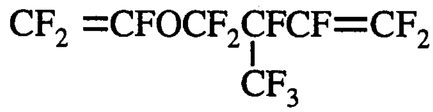

,

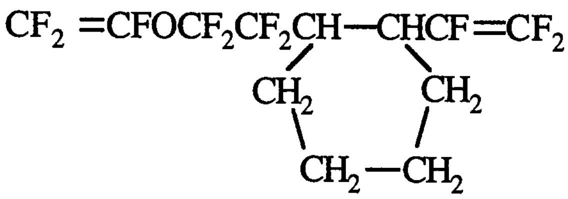

,

$CF_2=CFOCF_2OCF_2CF=CF_2$ , $CF_2=CFOCF_2CF_2CH=CH_2$ ,

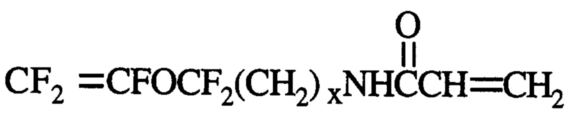

(x: integer of 1-4)

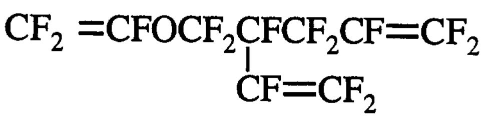

,

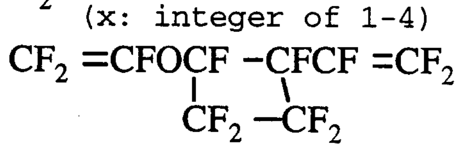

,

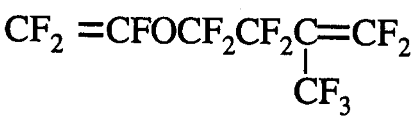

,

$CF_2=CFO(CF_2)_2CF=CFCF_2$ ,

$CF_2=CFOCF_2CF_2OCF=OFC1$ ,

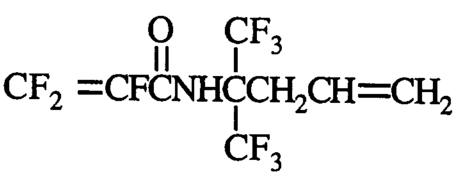

,

$CF_2=CFCF_2CF_2CH=CH_2$ ,

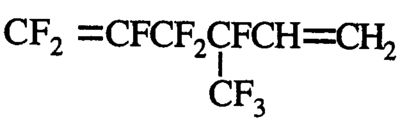

,

$CF_2=CHOCH_2CH_2CF=CF_2$ ,

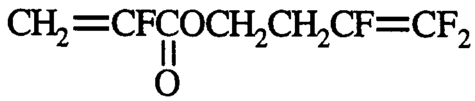 , 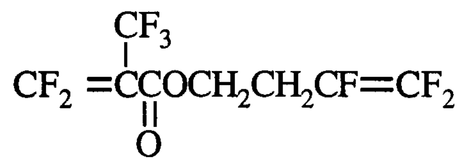 ,

and $CH_2=CHOCH_2CH_2CF_2CF=CF_2$

Examples of fluororesins prepared from the above monomers are follows:

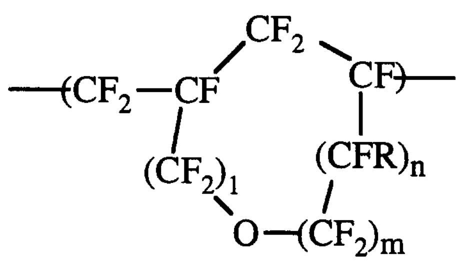

(l: an integer of 0-5, m: an integer of 0-4, n: an integer of 0-1, l+m+n: an integer of 1-6, R: F or $CF_2$),

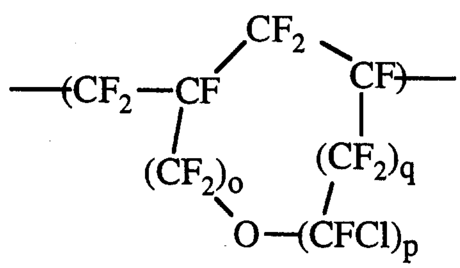

(o, p, q: an integer of 0-5, o+p+q: an integer of 1-6),

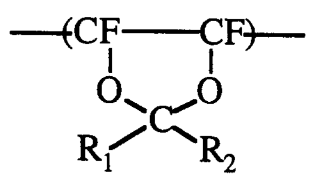

($R_1$, $R_2$: F or $CF_3$),

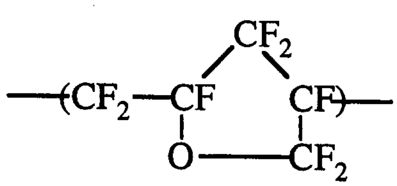 , 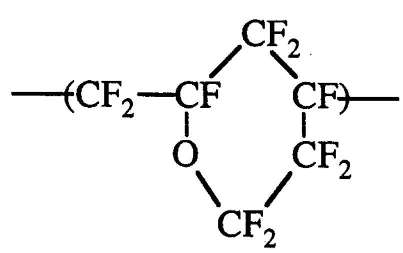 ,

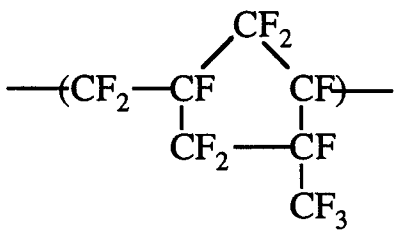
,
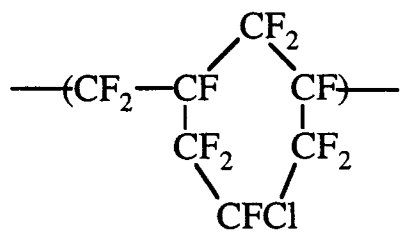
,

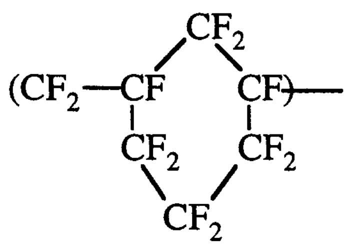
,
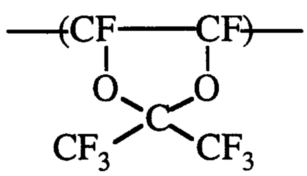
,

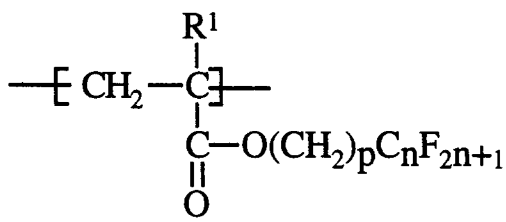

($R^1$: a hydrogen atom, a methyl group or a fluorine atom, p, n: an integer),

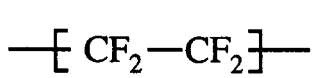
, and
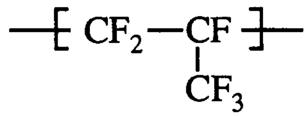

The fluororesin preferably is a homopolymer of perfluoro-2,2-dimethyl-1-dioxol or tetrafluoroethylene or a copolymer of these monomers.

The refractive index of the fluororesin (fluorine-containing polymer) is linearly reduced in proportion to content of fluorine atom in the fluororesin, and the refractive index of the low refractive index layer (containing the fluororesin particles) is reduced proportional to increase of content of micro voids in the low refractive index layer. Thus, the refractive index of low refractive index layer can be lowered by increasing both the contents of fluorine atoms in the particles and the micro voids. Thus, to obtain the low refractive index layer having extremely low refractive index, the content of fluorine atom in the fluororesin generally is not less than 0.30 weight fraction, preferably is not less than 0.35 weight fraction, especially in the range of 0.35 to 0.75 weight fraction, and the content of micro voids generally is in the range of 0.05 to 0.50 volume fraction, preferably is in the range of 0.10 to 0.50 volume fraction, especially in the range of 0.10 to 0.28 volume fraction.

In the case that particles having monodispersed particle size are made closest packing, micro voids formed by the surrounding particles are 26% (0.26 volume fraction). Further, when the particles are made simple cubic packing, micro voids formed by the surrounding particles are 48% (0.48 volume fraction). In the practical system (i.e., the low refractive index layer), the particles have distribution range of particle size although the range is narrow and therefore the volume fraction of micro voids of the low refractive index layer shows somewhat different value from the above value. Further, the volume fraction of micro voids varies depending upon methods or conditions for forming the low refractive index layer (i.e., for bonding the particles).

When the volume fraction of micro voids is too high, mechanical strength of the low refractive index layer is lowered. Therefore, the volume fraction of micro voids of the low refractive index layer generally is not more than 0.50 volume fraction as mentioned above. In the case that a small amount of binder is employed, the volume fraction of micro voids varies depending on the ratio of the particles and the binder. Provided the micro voids formed between the particles have size of decades nm to several hundred nm (i.e., size of not larger than wavelength of light), a transparent layer

having the aimed refractive index can be formed by selecting material in terms of refractive index and by adjusting the content of micro voids in the layer.

In the case that a small amount of binder is employed in the low refractive index layer, the binder is needed to be used so as not to fill up the micro voids. Preferred examples of binder include water-soluble resins such as polyvinyl alcohol and polyoxtethylene; acrylic resins such as polymethyl acrylate and polymethyl acrylate; and cellulose derivatives such as nitrocellulose. In the case that the particles are dispersed in water, the water-soluble resins are employed as the binder. In the case that the particles are dispersed in organic solvent, preferred are resins (i.e., the above acrylic resins and cellulose derivatives) which can be soluble in the organic solvent and which has a strong affinity for the particles or the transparent film and a high transparence. Further, in the case that a polymerizable binder is employed as a binder for fluororesin particles, the resultant layer of fluororesin particles can be cross-linked by ultraviolet radiation or heating. The binder is generally employed in the minimum amount for enabling the bonding between the particles. The binder (e.g., Polyvinyl alcohol) is generally employed in the amount of less than 25 weight %, preferably less than 10 weight %.

The anti-reflection film generally comprises a support and the low refractive index layer thereon. The support generally is a transparent film. Examples of materials for the transparent film include cellulose derivatives (e.g., diacetyl cellulose, triacetyl cellulose, propionyl cellulose, butyryl cellulose and acetyl propionyl cellulose), polyamides, polycarbonates (e.g., those described in U.S. Patent No. 3023101), polyesters (e.g., polyethylene terephthalate, polyethylene naphthalate, polybutylene terephthalate, poly-1,4-cyclohexanedimethylene terephthalate, polyethylene-1,2-diphenoxyethane-4,4'-dicarboxylate, and polyesters described in Japanese Patent Publication No. 48(1973)-40414), polystyrene, polyolefins (e.g., polypropylene, polyethylene and polymethylpentene), polymethyl methacrylate, syndiotactic polystyrene, polysulfone, polyethersulfone, polyarylate, polyether ketone, polyether imide and polyoxyethylene. Preferred are triacetyl cellulose, polycarbonate and polyethylene terephthalate.

The refractive index of the transparent film generally is in the range of 1.40 to 1.60.

In the case that the anti-reflection film is a multi-layer film, the low refractive index layer is employed together with one or more layers having higher refractive index than that of the low refractive index layer (e.g., high refractive index layer, intermediate refractive index layer mentioned previously).

Examples of materials for forming the layer having higher refractive index include organic materials such as thermoplastic resins (e.g., polystyrene, copolymers of styrene and other monomer polymerizable with styrene, polymer having an aromatic group, a heterocyclic group or a cycloalkyl or cycloalkenyl other than polystylene, and polymers having a halogen atom other than fluorine atom), thermosetting resins (e.g., compositions containing as a hardener melamine resin, phenol resin or epoxy resin, compositions for forming polyurethane (e.g., combination of heterocyclic or aromatic polyisocyanate and polyol), and radical curable compositions containing resin or prepolymer modified by introducing a group having double bond into the above polymer or resin. The materials preferably have high film forming properties.

The layer having higher refractive index can be formed by using inorganic particles dispersed in an organic material. In this case, an organic material having refractive index lower than the above materials can be employed because the inorganic particles generally have high refractive index. Naturally, the combination of inorganic particles and organic material enables the formation of layer having refractive index higher than that of layer of the above organic material. Any organic materials are employable in the combination so long as they have transparence and are capable of stably dispersing the inorganic particles. Examples of the organic materials include the above materials, vinyl resins, acrylic resins, polyesters, alkyd resins, cellulose derivatives, urethane resins, and silicon compound substituted with an organic group; and hardeners used together with these resins.

The silicon compounds are generally compounds represented by the formula:

$$R^{11}{}_{a}R^{12}{}_{b}SiX_{4-(a+b)}$$

in which each of $R^{11}$ and $R^{12}$ independently represents an alkyl group, an alkenyl group, an allyl group or a hydrocarbon group substituted with halogen, epoxy, amino, mercapto, methacryloyl or cyano; X represents one hydrolysis group selected from the group consisting of an alkoxy group, an alkoxyalkoxy group, a halogen atom and an acyloxy group; each of a and b is 0, 1 or 2 provided a+b is 1 or 2; or hydrolysis products thereof.

Preferred examples of the inorganic compounds forming the inorganic particles include oxides of metals such as aluminum, titanium, zirconium and antimony. The inorganic compounds are available in the form of particle or dispersion in water and/or organic solvent. The inorganic compound (particles) is dispersed in the above organic material and employed for forming the layer having higher refractive index.

As materials for forming the layer having higher refractive index, further employable are the following inorganic materials which have film-forming properties and can be dispersed in solvent or are per se in liquid form. Examples of the inorganic materials include alkoxides of various elements, salts of organic acids, coordination compounds bonded to compound capable of forming coordination (e.g., chelate compounds), and activated inorganic polymers. Preferred examples of the inorganic materials include metal alkoxides such as titanium tetraethoxide, titanium tetraisopropoxide,

titanium tetra-n-propoxide, titanium tetra-n-butoxide, titanium tetra-sec-butoxide, titanium tetra-tert-butoxide, aluminum triethoxide, aluminum triisopropoxide, aluminum tributoxide, antimony triethoxide, antimony tributoxide, zirconium teraethoxide, zirconium tetraisopropoxide, zirconium tetra-n-propoxide, zirconium tetra-n-butoxide, zirconium tetra-sec-butoxide and zirconium tetra-tert-butoxide; chelate compounds such as diisopropoxytitanium-bis(acetylacetonate), dibutoxytitanium-bis(acetylacetonate), diethoxytitanium-bis(acetylacetonate), bis(acetylacetone)zirconium, alminumacetylacetonate, aluminumdi-n-butoxide monoethylacetylacetate, aluminumdiisopropoxide monomethylacetoacetate and tri-n-butoxidezirconium monoethylacetoacetate; and activated inorganic polymers comprising main component of zirconyl carbonate ammonium or zirconium. Further, various alkylsilicates or hydrolysis products thereof, and fine silica particles (especially silica gel in colloidal state), although they have relatively low refractive index, can be employed in combination with the above inorganic materials.

The anti-reflection film of the invention can be so treated as to have anti-glare function (i.e., function scattering an incident light on the surface not to display a background view on the surface). For example, such an anti-reflection film can be prepared by the steps of forming unevenness on the surface of the support (transparent film) and forming an anti-reflection layer(s) such as the low refractive index layer on the surface. The formation of unevenness can be, for example, conducted by forming a layer containing inorganic or organic particles on the surface of the support. Otherwise, particles having particle size of 50 nm to 2 µm larger than that of the fluororesin particles are incorporated into a coating liquid for forming the low refractive index layer in the amount of 0.1 to 50 weight % based on the amount of fluororesin particles, whereby unevenness can be formed on the top surface of the anti-reflection film. The anti-reflection film having the anti-glare function generally has haze of 3 to 30%.

The anti-reflection film of the invention (preferably anti-reflection film having the anti-glare function) can be incorporated in a display device such as a liquid crystal display (LCD), a plasma display (PDP), an electroluminescence display (ELD) or a cathode ray tube display (CRT). In the display device provided with the anti-reflection film of the invention, displayed image is easily viewable.

The liquid crystal display provided with the anti-reflection film, for example, has the following structure:

A liquid crystal display comprising a liquid crystal cell which comprises a pair of substrates provided with a transparent electrode and nematic liquid crystal sealed therebetween, and a pair of polarizing sheets arranged on both sides of the cell; wherein at least one of the polarizing sheets is provided with the anti-reflection film thereon.

The low refractive index layer is, for example, formed by coating a coating liquid of the fluororesin particles (e.g., fluororesin latex) in solvent (e.g., water, organic solvent) on the transparent film or high or intermediate refractive index layer, and drying the coated layer. The coating is generally conducted using a coating machine such as bar coater, curtain coater, dip coater, spin coater or roll coater.

In the invention, an intermediate layer such as a hard coating layer, a moistureproof layer or an antistatic layer can be provided on the support. Examples of materials for forming the hard coating layer include polymer such as acrylic resin, urethane resin or epoxy resin and/or oligomer and monomer (e.g., UV-curable resin); or material containing silicon.

Examples of the present invention and comparison examples are given below, but these examples by no means restrict the invention.

EXAMPLE 1

Trifluoroethyl acrylate (trade name: Biscoat 3F, content of fluorine atom: 0.36 weight fraction, available from Osaka Organic Chemistry Co., Ltd.) was polymerized under emulsification to prepare a latex of fluororesin particles (mean particle size: 33 nm, refractive index: 1.405). A coating liquid of the latex dispersed in a mixture of water and methanol (9:1, by weight; solid content: 1 weight %) was coated using a spin coater on a triacetyl cellulose film (TAC film) at a temperature lower than Tg of the particles and dried at the temperature to form a low refractive index layer (thickness: 100 nm), whereby an anti-reflection film was obtained.

The resultant low refractive index layer showed a refractive index of 1.34, and micro voids of approx. 0.15 volume fraction. The refractive index of the low refractive index layer ($n_{layer}$) was determined from its reflectance (R) and refractive index of the TAC film ($n_{base}$) as follows:

$$n_{layer} = \sqrt{n_{base} \times \frac{1+\sqrt{R}}{1-\sqrt{R}}}$$

in which R represents reflectance of the low refractive index layer and $n_{base}$ represents refractive index of the TAC film (transparent film).

The volume fraction of micro voids was determined from the refractive index of the low refractive index layer ($n_{layer}$) and refractive index of the TAC film ($n_{base}$), as follows:

$$\text{Volume fraction} = (n_{layer} - n_{base})/(1 - n_{base})$$

Further, the low refractive index layer was observed using electron microscope to confirm micro voids formed by superposing almost three particles upon one another.

Reflectance of the anti-reflection film (TAC film and low refractive index layer) showed 0.98% (reflectance of light of wavelength of 550 nm), while that of TAC film showed 3.75%.

EXAMPLE 2

Hexafluoroisopropyl methacrylate (trade name: Biscoat 6FM, content of fluorine atom: 0.48 weight fraction, available from Osaka Organic Chemistry Co., Ltd.) was polymerized under emulsification to prepare a latex of fluororesin particles (mean particle size: 30 nm, refractive index: 1.387). A coating liquid of the latex dispersed in a mixture of water and methanol (9:1, by weight; solid content: 1 weight %) was coated using a spin coater on a triacetyl cellulose film (TAC film) and dried at 40°C to form a low refractive index layer (thickness: 100 nm), whereby an anti-reflection film was obtained.

The resultant low refractive index layer showed a refractive index of 1.30, and micro voids of approx. 0.23 volume fraction. The refractive index and volume fraction of micro voids were determined in the same manner as in Example 1. Further, the low refractive index layer was observed using electron microscope to confirm micro voids formed by superposing three particles upon one another.

Reflectance of the anti-reflection film (TAC film and low refractive index layer) showed 0.44% (reflectance of light of wavelength of 550 nm), while that of TAC film showed 3.75%.

EXAMPLE 3

A coating liquid of polystyrene (trade name: Torplex GPPS525-51, available from Mitsui Toatsu Chemicals, Inc.) in toluene (3 weight %) was coated using a spin coater on a triacetyl cellulose film (TAC film) at room temperature and dried at room temperature to form a high refractive index layer (refractive index: 1.585, thickness: 160 nm).

Perfluoro-2,2-dimethyl-1,3-dioxole (PDD) and tetrafluoroethylene (TFE) were polymerized under emulsification to prepare a latex of fluororesin particles (content of fluorine atom: approx. 0.60 weight fraction, mean particle size: 30 nm; refractive index: 1.310). A coating liquid of the latex dispersed in a mixture of water and methanol (9:1, by weight; solid content: 1 weight %) was coated using a spin coater on the high refractive index layer at room temperature and dried at room temperature to form a low refractive index layer (thickness: 100 nm), whereby an anti-reflection film was obtained.

The resultant low refractive index layer had a refractive index of 1.28, and micro voids of approx. 0.10 volume fraction. The refractive index and volume fraction of micro voids were determined in the same manner as in Example 1. Further, the low refractive index layer was observed using electron microscope to confirm micro voids formed by superposing three particles upon one another.

Reflectance of the anti-reflection film (TAC film and low refractive index layer) showed 0.19% (reflectance of light of wavelength of 550 nm), while that of TAC film showed 3.75%. Further, the anti-reflection film was equal to a film having two deposited layers of metal compounds (conventional multilayer anti-reflection film) in anti-reflection effect.

EXAMPLE 4

A coating liquid of 25 weight parts of dipentaerythritol penta/hexaacrylate (trade name: DPHA, available from Nippon Kayaku Co., Ltd.), 25 weight parts of urethane acrylate oligomer (trade name: UV-6300B, available from Nippon Synthetic Chemical Industry Co., Ltd.), 2 parts of photopolymerization initiator (Irgacure-907, available from Ciba-Geigy) and 0.5 part of sensitizer (Kayacure-DETX, available from Nippon Kayaku Co., Ltd.) in 50 weight parts of methyl ethyl ketone, was coated using a spin coater on a triacetyl cellulose film (TAC film) and exposed to ultraviolet radiation to form a hard coating layer (thickness: 5 μm).

A coating liquid containing dispersion of $TiO_2$ particles and polymethyl methacrylate (refractive index: 1.48) as a binder ($TiO_2$/binder= 22/78, by weight; solid content: 2 weight %) was coated on the hard coating layer and dried at 100°C to form an intermediate refractive index layer (refractive index: 1.62, thickness: 78 nm).

A coating liquid containing dispersion of $TiO_2$ particles and the binder ($TiO_2$/binder= 68/32, by weight; solid content: 2 weight %) was coated on the intermediate refractive index layer and dried at 100°C to form an high refractive index layer (refractive index: 2.00, thickness: 127 nm).

Subsequently, a latex of fluororesin particles (mean particle size: 30 nm, refractive index: 1.387) prepared from hexafluoroisopropyl methacrylate (i.e., latex obtained in Example 2) and polyvinyl alcohol (refractive index: 1.50) as a binder were mixed to form a coating liquid (fluororesin particles/binder= 84/16, by weight; solid content: 1 weight %). The coating liquid was coated using a spin coater on the high refractive index layer at 40°C and dried at room temperature to form a low refractive index layer (thickness: 91 nm), whereby an anti-reflection film was obtained.

The resultant low refractive index layer had a refractive index of 1.400, and micro voids of approx. 0.10 volume fraction. The refractive index and volume fraction of micro voids were determined in the same manner as in Example 1. Further, the low refractive index layer was observed using electron microscope to confirm micro voids formed by superposing almost three particles upon one another.

The anti-reflection film was equal to a film having three physically deposited layers of metal compounds (conventional multilayer anti-reflection film) in anti-reflection effect.

EXAMPLE 5

The procedures of Example 3 were repeated except for changing the triacetyl cellulose film to a polarizing plate having a surface subjected to anti-glare treatment (trade name: Sumicaran AG2, haze: 9%, available from Sumitomo Chemical Co., Ltd.) to form a polarizing plate having an anti-reflection film.

The polarizing plate was incorporated in a liquid crystal display (LCD). In the liquid crystal display, phenomenon of displaying a background view on the surface was greatly reduced and the displayed image was easily viewable.

**Claims**

1. An anti-reflection film comprising a low refractive index layer which comprises micro particles of a fluorine-containing polymer which are so deposited to superpose at least one micro particles on another, to form micro voids surrounded by the micro particles, said micro particles having a mean particle size of 5 to 200 nm and micro voids formed by superposing at least two said particles upon each other.

2. The anti-reflection film as defined in claim 1, wherein the fluorine-containing polymer is a crystalline polymer.

3. The anti-reflection film as defined in claim 1, wherein the fluorine-containing polymer contains a fluorine atom in the amount of not less than 0.30 weight fraction.

4. The anti-reflection film as defined in claim 1, wherein the micro void is contained in an amount of 0.05 to 0.50 volume fraction in the low refractive index layer.

5. The anti-reflection film as defined in claim 1, wherein the low refractive index layer further contains a binder.

6. The anti-reflection film as defined in claim 1, wherein the particles of fluorine-containing polymer have a core-shell structure.

7. The anti-reflection film as defined in claim 1, wherein the particles of fluorine-containing polymer are treated with a silane-coupling agent.

8. The anti-reflection film as defined in claim 1, wherein the fluorine-containing polymer is a homopolymer of perfluoro-2,2-dimethyl-1-dioxol or tetrafluoroethylene or a copolymer of them.

9. The anti-reflection film as defined in claim 1, which has a haze of 3 to 30%.

10. An anti-reflection film comprising a low refractive index layer which comprises micro particles of a fluorine-containing polymer which are so deposited to superpose at least one micro particles on another, to form micro voids surrounded by the micro particles, said micro particles having a mean particle size of 5 to 200 nm and micro voids formed by superposing at least two said particles upon each other, said low refractive index layer being provided on a high refractive index layer having a refractive index higher than that of the low refractive index layer.

11. The anti-reflection film as defined in claim 10, wherein the fluorine-containing polymer contains a fluorine atom in the amount of not less than 0.30 weight fraction.

12. The anti-reflection film as defined in claim 10, wherein the micro void is contained in an amount of 0.05 to 0.50 volume fraction in the low refractive index layer.

13. An anti-reflection film comprising a low refractive index layer which comprises micro particles of a fluorine-containing polymer which are so deposited to superpose at least one micro particles on another, to form micro voids surrounded by the micro particles, said micro particles having a mean particle size of 5 to 200 nm and micro voids

formed by superposing at least two said particles upon each other, said low refractive index layer being provided on a high refractive index layer having a refractive index higher than that of the low refractive index layer, which is then provided on an intermediate refractive index layer having a refractive index between that of the low refractive index layer and that of the high refractive index layer.

**14.** The anti-reflection film as defined in claim 13, wherein the fluorine-containing polymer contains a fluorine atom in the amount of not less than 0.35 weight fraction.

**15.** The anti-reflection film as defined in claim 13, wherein the micro void is contained in an amount of 0.05 to 0.50 volume fraction in the low refractive index layer.

**16.** A display device provided with at least one anti-reflection film of claim 1, 10 or 13.

FIG. 1

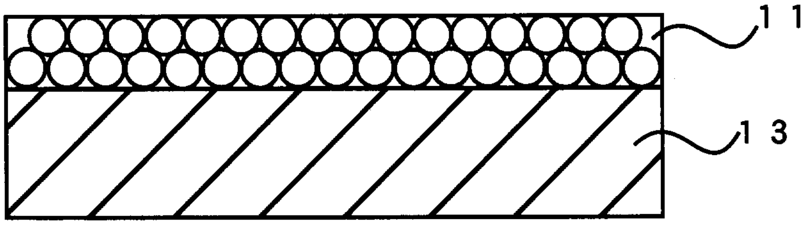


FIG. 2

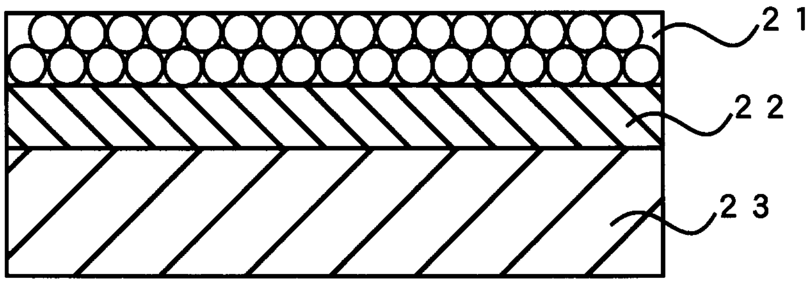


FIG. 3